(19) Europäisches Patentamt
European Patent Office
Office européen des brevets

(11) **EP 2 838 208 B1**

(12) **EUROPEAN PATENT SPECIFICATION**

(45) Date of publication and mention
of the grant of the patent:
**12.09.2018 Bulletin 2018/37**

(51) Int Cl.:
***H04L 25/03*** *(2006.01)*     ***H04B 7/005*** *(2006.01)*
***H04L 27/26*** *(2006.01)*     *H04L 25/02* *(2006.01)*

(21) Application number: **12873947.1**

(86) International application number:
**PCT/CN2012/077405**

(22) Date of filing: **25.06.2012**

(87) International publication number:
**WO 2013/152561 (17.10.2013 Gazette 2013/42)**

(54) **SYNCHRONIZATION AND EQUALIZATION COMBINED DESIGN METHOD AND DEVICE FOR MICROWAVE SYSTEM**

VERFAHREN FÜR KOMBINIERTE SYNCHRONISIERUNG UND ENTZERRUNG UND VORRICHTUNG FÜR MIKROWELLENSYSTEM

PROCÉDÉ ET DISPOSITIF DE CONCEPTION DE SYNCHRONISATION ET D'ÉGALISATION COMBINÉES POUR UN SYSTÈME HYPERFRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.04.2012 CN 201210107241**

(43) Date of publication of application:
**18.02.2015 Bulletin 2015/08**

(73) Proprietor: **Sanechips Technology Co., Ltd.
Shenzhen, Guangdong 518055 (CN)**

(72) Inventor: **CAO, Nanshan
Shenzhen
Guangdong 518057 (CN)**

(74) Representative: **Novagraaf Technologies
Bâtiment O2
2, rue Sarah Bernhardt
CS90017
92665 Asnières-sur-Seine Cedex (FR)**

(56) References cited:
**WO-A1-2009/109938     CN-A- 1 787 509
CN-A- 101 022 295     CN-A- 101 958 745
TW-A- 200 917 683     US-A1- 2002 137 510
US-A1- 2009 147 900**

**EP 2 838 208 B1**

**Description**

Technical Field

The present invention relates to the field of wireless communication technologies, and more particularly, to a synchronization and equalization combined design method and device for microwave system.

Background of the Related Art

Microwave Communication is a technology using the microwave (electromagnetic waves whose wavelength is between 0.1mm and 1m) to communicate. The microwave communication does not require a solid medium, and the microwave can be used for transmission as long as there is no barrier in the straight-line distance between two points. Using the microwave to communicate has advantages of large capacity, good quality and propagation in a very long distance, therefore it is an important communication means in the national communication networks and is also widely applicable to various dedicated communication networks.

Due to the very high frequency and very short wavelength of the microwave, its propagation characteristics in the air are similar to light waves, that is, moving in a straight line and reflected or blocked once encountering a barrier, and therefore the primary method of microwave communication is horizon communication, and relay forwarding is required when it is over the horizon. In general, due to the influence of the Earth's curve surface as well as the loss of space transmission, a relay station needs to be set up every 50 km or so, so as to amplify, forward and extend the electric waves. This communication method is also called microwave relay communication or microwave relaying communication. Long-distance microwave communication lines can maintain a high quality of communication after transmitting thousands of kilometers through dozens of relays.

The main advantages of microwave communication are:

1) The frequency bandwidth of the communication band is wide, and the capacity of transmission information is large. The frequency bandwidth occupied by the microwave band is about 300GHz, while the frequency bandwidth occupied by long wave, medium wave and short wave band is less than 30MHz in total. One set of microwave relay communication equipment can accommodate several thousands or even ten thousands of speech channels to work simultaneously or transmit wideband signals such as television image signals and so on.

2) The communication is stable and reliable. When the frequency of communication is higher than 100MHz, the impact of industrial disturbance, atmospheric interference and sunspot activity on it is small.

Due to the high frequency of the microwave band, the impact of these interferences on the microwave communication is minimal.

3) the flexibility of the communication is relatively large. The microwave relay communication uses the relay mode to achieve long-distance communications on the ground, and it can go across swamps, rivers, mountains and other special geographical environments. In the event of disasters such as earthquakes, floods and wars, the establishment and transfer of the communication are relatively easy, in which aspect it has greater flexibility than the wired communication.

4) the gain of antenna is high and very directive. When the area of antenna is fixed, the gain of antenna is inversely proportional to the square of the working wavelength. Due to the short working wavelength of the microwave communication, the size of antenna can be made very small, usually made into a planar antenna with high gain and strong directivity. This can reduce the output power of the microwave transmitter, and the strong directivity of the microwave antenna is used to make the propagation direction of microwave electromagnetic wave align to the next receiving station, thus reducing the mutual interferences in communication.

5) The investment is small and the construction is fast. Compared to other wired communication, in the conditions that the capacity and quality of communication are basically same, the calculation is performed according to the kilometer of speech channels, the construction costs of the microwave relay communication lines is small, and the construction period is short.

In the microwave communication, the synchronization and equalization designs of the receiving end are extremely basic and important parts of the microwave communication. In the traditional receiving end of microwave, the synchronization and equalization designs are two separate parts, and the synchronization module completes the synchronizations of system time and frequency, and the equalization module completes the channel compensation. Wherein, the time synchronization commonly uses the time-domain autocorrelation or cross-correlation technique, and by designing the specific synchronization symbol, the receiver makes the relevant searches to complete the time synchronization; the frequency synchronization is mostly established on the basis of the time synchronization, and it is estimated through the designed synchronization symbol or the pilot; the design of equalizer is mostly implemented with the fractional tap filter, generally with the feedback mechanism. These traditional designs completely separate the synchronization and equalization, resulting in the synchronization design very limited, and when there is synchronization offset and recovery, it leads to the equalizer re-converging, resulting in an impact on receiving and decoding; meanwhile, the time synchronization is also mostly limited in the scope of time domain, whose performance in harsh environments is difficult to be guaranteed.

The features of the preamble of the independent claims are known from US2002137510A1. Related technologies are also known from WO2009109938A1.

Summary of the Invention

To solve the technical problem, the present invention provides a synchronization and equalization combined design method and device for a microwave system as defined in the independent claims, in order to complete the synchronization and equalization of a receiving end.

In summary, the embodiment of the present invention proposes a FFT (Fast Fourier Transform) / IFFT (Inverse Fast Fourier Transform) based time synchronization scheme, and combines the designs of the synchronization and the equalization, to effectively improve the estimation performance of time synchronization, meanwhile it solves the limitation of the equalizer on the synchronization adjustment and improves the overall performance of the receiver.

Brief Description of the Drawings

The accompanying drawings described herein are used to provide a further understanding of the present invention and constitute a part of this application, and the exemplary embodiments of the present invention and their description are used to explain the present invention and do not constitute an unduly limitation of the present invention. In the accompanying drawings:

    FIG. 1 is a flow chart of a synchronization and equalization combined design process in accordance with an embodiment of the present invention;
    FIG. 2 is a schematic diagram of a transmitted synchronization symbol;
    FIG. 3 is a schematic diagram of the structure of a synchronization and equalization combined design device in accordance with an embodiment of the present invention.

Preferred Embodiments of the Present Invention

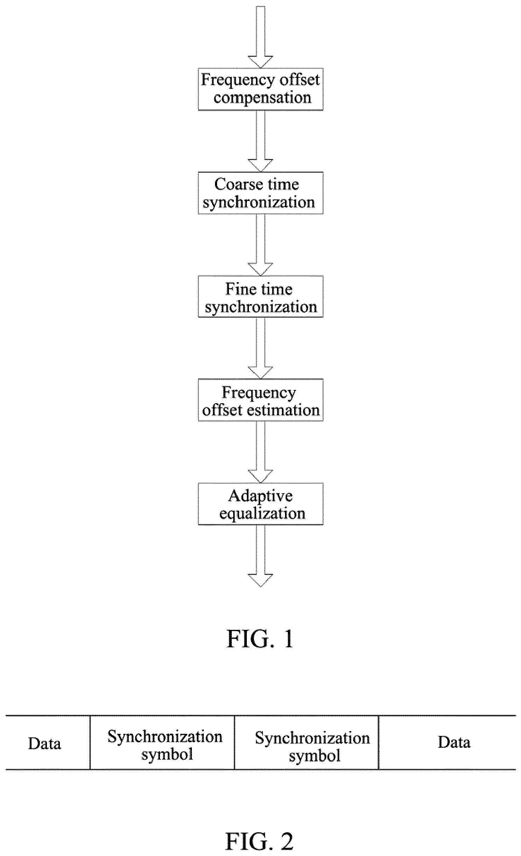

As shown in FIG. 1, this embodiment provides a synchronization and equalization combined design method for a microwave system and uses the following scheme:

    frequency offset compensation: according to a frequency offset estimation result, performing a frequency offset compensation on the received data;

    coarse time synchronization: calculating a delay correlation value according to the cached synchronization symbol, and searching for the maximum value of the delay correlation value as a result of coarse time synchronization;

    fine time synchronization: adjusting a timing position of the received symbol in accordance with the obtained adjustment value of synchronization position;

    frequency offset estimation: using a delay correlation algorithm to obtain a frequency offset estimation result;

    adaptive equalization: shifting the coefficient of equalizer according to the adjustment value of synchronization position, and completing a channel equalization.

Specifically, in the fine time synchronization, the adjustment value of synchronization position can be obtained in the following way:

    taking the coarse synchronization result as a starting point, extracting N received data, and performing a FFT to obtain a first frequency-domain symbol sequence;

    performing a FFT on the locally stored synchronization symbol to obtain a second frequency-domain symbol sequence;

    perform a inverse fast Fourier transform on the ratio of the first frequency-domain symbol sequence to the second frequency-domain symbol sequence, to obtain a time-domain channel impulse response;

    searching for the maximum value of the time-domain channel impulse response, and the position corresponding to the maximum value of the time-domain channel impulse response being the adjustment value of synchronization position.

Hereinafter with reference to the accompanying drawings, the embodiments of the present invention will be described in detail. It should be noted that, in the case of no conflict, the embodiments of the present application and features in the embodiments may be arbitrarily combined with each other.

The synchronization and equalization combined design process for a microwave system in accordance with the present embodiment mainly comprises the following steps:

    the first step: according to the frequency offset value output by the frequency offset estimation module, a frequency offset compensation is performed on the received data.

the second step: the received data is cached, and the delay correlation value y is calculated according to two complete consecutive synchronization symbols in the data.

Wherein, the synchronization symbol is a known sequence constrained by both the transmitting and receiving parties, and two synchronization symbols are transmitted at each time, as shown in FIG. 2.

The third step: searching for the maximum value of y, the position corresponding to the maximum value is a result of the coarse synchronization.

the fourth step: taking the coarse synchronization result as the starting point, extracting N received data a(n), a FFT is performed to obtain N frequency-domain symbols A(n), wherein N is a positive integer.

The fifth step: a FFT is performed on the locally stored synchronization symbols b(n) to obtain N frequency-domain symbols B(k), wherein k=0,1, ......, N-1.

This step can be implemented by directly storing B(k) in the local in advance.

The sixth step: the time-domain channel impulse response is calculated.

With the A(n) and B(k) sequences and the single tap channel estimation algorithm, the calculation is done to obtain the frequency domain channel response, and then the IFFT is performed on the frequency domain channel response to obtain a time domain channel impulse response c(n).

The seventh step: searching for the maximum value of c(n), the position of the maximum value is the adjustment value of synchronization position d.

According to the adjustment value of synchronization position d, the system adjusts the timing position of the received symbol.

The eighth step: frequency offset estimation.

A typical delay correlation algorithm can be used to perform a delay correlation on the repeatedly sent training sequence, and the cumulative de-noising is used to calculate its phase angle, and through the phase angle and the sampling time, the carrier frequency offset can be estimated.

Wherein, the frequency offset can be estimated with the continuously sent synchronization symbols; if the system has a pilot, the pilot can also be used to perform the frequency offset estimation.

The ninth step: according to the frequency offset estimation result (that is, the estimated carrier frequency offset), a frequency offset compensation is performed on the received data.

Wherein, the frequency offset compensation is before the coarse time synchronization, and the specific compensation method is to perform the corresponding phase rotation on each of the received data.

The tenth step: according to the adjustment value of synchronization position d, the filtering coefficient of equalizer is shifted.

In particular, if d>0, left shifting the filtering coefficient by d data, the last ones are filled with 0; otherwise, right shifting the filtering coefficient by abs(d) data, the first ones are filled with 0. "Abs" indicates an absolute value operation.

The eleventh step: the equalization filtering is performed, and this step is the ordinary adaptive equalization, and it can use the LMS (Least mean square) or any other adaptive algorithm, and the filter structure is the multi-tap FIR. This algorithm is very popular and mature and is not repeated here.

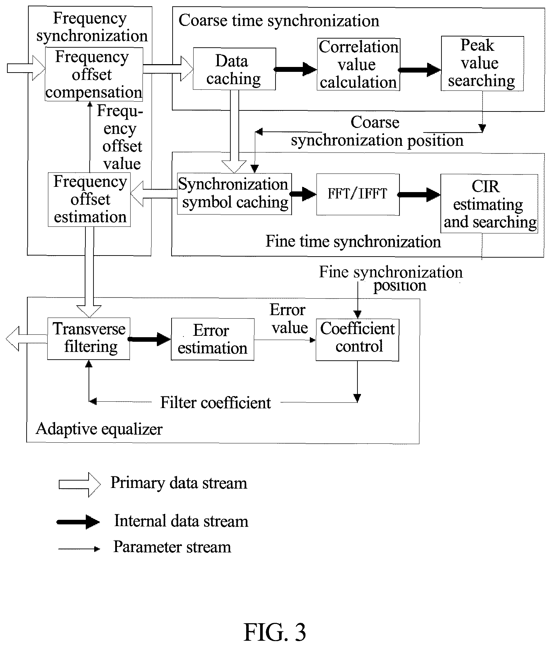

As shown in FIG. 3, the embodiment of the present invention further provides a synchronization and equalization combined design device for a microwave system, and this device comprises the following modules:

a coarse time synchronization module, used for implementing a coarse time synchronization.

a fine time synchronization module, used for implementing a fine time synchronization.

a frequency synchronization module, used for completing a frequency synchronization.

an adaptive equalizer, used for performing a channel equalization.

Wherein, the abovementioned coarse time synchronization module further comprises a data caching module, a correlation value calculating module and a peak value searching module. The data caching module is used for storing the received data; the correlation value calculating module is used for calculating a delay correlation value at each time moment; the peak value searching module is used for searching for the maximum delay correlation value.

Wherein, the abovementioned fine time synchronization module further comprises a synchronization symbol caching module, a FFT/IFFT module, and a time-domain channel impulse response (CIR) estimating and searching module. The synchronization symbol caching module is used to cache and send the received synchronization symbols to the frequency offset estimation module; the FFT/IFFT module is used to implement the FFT and IFFT transformations; the CIR estimating and searching module is used to implement the time-domain channel impulse response estimation and search for the maximum time-domain channel impulse response value.

Wherein, the abovementioned frequency synchronization module further comprises a frequency offset estimation module and a frequency offset compensation module. The frequency offset estimation module is used for implementing the carrier frequency offset estimation; and the frequency offset compensation module is used for implementing the carrier frequency offset compensation.

Wherein, the abovementioned adaptive equalizer further comprises an error estimation module, a coefficient control module and a transverse filtering module. The error calculation module is used for calculating the equalization error value; the coefficient control module is used for completing the shift and update of the filtering coefficient according to the fine synchronization position and the calculated equalization error value; the transverse filtering module is used for filtering the data.

A specific example will be given in the following to describe the embodiment of the present invention in further detail. The specific examples mainly comprise the following steps:

in step 101, the data of the length of two synchronization symbols are cached, and the delay correlation value is calculated, and the following calculation method is used specifically:

$$y(j) = \sum_{i=0}^{N-1} x(i) * x(i+N)'$$

wherein, N is the length of the synchronization symbols.

In step 102, searching for the maximum value of y, the position corresponding to the maximum value is a result of coarse synchronization.

In step 103, taking the coarse synchronization result as a starting point, N receiving data a(n) are extracted, and the FFT is performed on the N receiving data a(n) to obtain N frequency-domain symbols A(n).

In step 104, the FFT is performed on the locally stored synchronization symbols b(n) to obtain B(k).

In step 105, the time domain channel impulse response is calculated, and the calculation method is as follows:

$$C(k)=A(k)/B(k);$$

$$c(n)=IFFT[C(k)].$$

In step 106, searching for the maximum value of c(n), the position of the maximum value is the adjustment value of synchronization position d.

In step 107, the frequency offset estimation is performed and the typical delay correlation algorithm is used, and the estimation method is as follows:

$$\Delta f = \frac{\arg\left[\sum_{j=0}^{M} \sum_{k=0}^{N-1} a_{j-1,k} * a'_{j,k}\right]}{2\pi * N * T_s}$$

wherein, arg represents obtaining the angle, M is the number of multiple accumulations, N is the length of the synchronization symbols, Ts is the length of each data; M=1, representing using two consecutive synchronization symbols to perform one frequency offset estimation.

In step 108, according to the frequency offset estimation result, the frequency offset compensation is performed on the received data:

$$\overline{a(n)} = a(n) * e^{j*\Delta f*2\pi*n*T_s}$$

Wherein $\overline{a(n)}$ is the data after the frequency offset compensation, $\Delta f$ is the frequency offset estimation value, and Ts is the sampling interval. According to the practical situation, a lookup table or CORDIC (Coordinate Rotation Digital Computer) algorithm can be used to achieve the phase rotation.

In step 109, according to the adjustment value of synchronization position d, the coefficient of equalizer is shifted.

If d<0, left shifting the filtering coefficient in loop by d data, the last ones are filled with d zeros; if d>0, right shifting the filtering coefficient by abs(d) data, the first ones are filled with abs(d) zeros. The specific operations are as follows:

if d=0, no adjustment is done on the coefficient;
if d>0, the last k-d data of the Coef_old are assigned to the first k-d data of the Coef_new, and the rest coefficients of the Coef_new are assigned as 0;
if d<0, the first k+d data of the Coef_old are assigned to the last k+d data of the Coef_new, and the rest coefficients of the Coef_new are assigned as 0.

Wherein, the Coef_new is the filtering coefficient after the fine synchronization adjustment, the Coef_old is the historical value of the filtering coefficients; k is the filtering order.

Step 110, adaptive equalization.

When the received symbol is a synchronization symbol or a pilot, the LMS algorithm is used to converge the coefficient of equalizer; when the received symbol is data, the data is input into the filter one by one, and the equalized data are filtered and output.

In summary, in the embodiments of the present invention, the problem of equalizer re-convergence is effectively avoided when the synchronizing position is adjusted by using the synchronization and equalization combined design; meanwhile, during the synchronization, the synchronization position is adjusted at any time according to the current situation to avoid the synchronization drift due to errors of the sampling clock; in addition, by replacing the traditional local correlation with the delay correlation, it greatly reduces the resource overhead of the correlator.

The above is only the preferred embodiments of the present invention and is not intended to limit the present invention, and the present invention may also have a variety of other embodiments, and without departing from the spirit and essence of the present invention, a person skilled in the art can accordingly make various modifications and deformations according to the present invention, and these corresponding modifications and deformations should fall within the protection scope of the appended claims of the present invention.

Obviously, those skilled in the art should understand that, each abovementioned module or step of the present invention can be implemented with general-purpose computing device, and they can be concentrated on a single computing device or distributed in a network composed of a plurality of computing devices, alternatively, they may be implemented with program codes executable by a computing device, furthermore, they can be stored in the storage means and executed by the computing device, and in some cases, the steps shown or described herein can be implemented in a different order, or they are made into integrated circuit modules respectively, or a plurality of modules or steps are made into a single integrated circuit module for implemenation. Thus, the present invention is not limited to any specific combination of hardware and software.

Industrial Applicability

With the abovementioned technical scheme, at least there are the following beneficial effects:

1. With the synchronization and equalization combined design, it effectively avoids the problem of equalizer re-convergence when the synchronization position is adjusted;

2. The FFT/IFFT method is used to perform the time synchronization, replace the traditional local correlation with the delay correlation, which greatly reduces the resource overhead of the correlator;

3. after using the structure of combined design, during the synchronization, the synchronization position can be adjusted at any time based on the current situation, so as to avoid the synchronization drift accumulation caused by the errors of sampling clock.

**Claims**

1. A synchronization and equalization combined design method for a microwave system, comprising:

according to a frequency offset estimation result, performing a frequency offset compensation on received data; caching the received data on which the frequency offset compensation has been performed, completing a coarse time synchronization on cached data to obtain a coarse synchronization result; taking the coarse synchronization result as a starting point, completing a fine time synchronization to obtain an adjustment value of synchronization position; adjusting a timing position of the received data on which the frequency offset compensation has been performed according to the adjustment value of synchronization position; shifting a filtering coefficient of an equalizer according to the adjustment value of synchronization position by: if the adjustment value of synchronization position d=0, the filtering coefficient of the equalizer remains unchanged; if d> 0, left shifting the filtering coefficient of the equalizer by d data; if d <0, right shifting the filtering coefficient of the equalizer by abs(d) data; wherein, the abs(d) is an absolute value of d; and completing, by the equalizer, an equalization filtering on the received data on which the frequency offset compensation has been performed according to the shifted filtering coefficient.

2. The method of claim 1, wherein, the step of completing a coarse time synchronization on cached data to obtain a coarse synchronization result comprises:

according to two consecutive synchronization symbols transmitted in the received data on which the frequency offset compensation has been performed, calculating a delay correlation value; searching for a maximum value of the delay correlation value, and a position corresponding to the maximum value of the delay correlation value being the coarse synchronization result.

3. The method of claim 1 or 2, wherein, the step of taking the coarse synchronization result as a starting point, completing a fine time synchronization to obtain an adjustment value of synchronization position comprises:

taking the coarse synchronization result as the starting point, extracting N data of the received data on which the frequency offset compensation has been performed, and performing a Fast Fourier Transform, FFT, on the extracted N data to obtain a first frequency-domain symbol sequence; performing a FFT on locally stored synchronization symbols to obtain a second frequency-domain symbol sequence; performing an inverse fast Fourier transform, IFFT, on a ratio of said first frequency-domain symbol sequence to said second frequency-domain symbol sequence, to obtain a time-domain channel impulse response; searching for a maximum value of the time-domain channel impulse response, and a position corresponding to the maximum value of the time-domain channel impulse response is the adjustment value of synchronization position.

4. The method of claim 1, wherein,
said step of completing the equalization filtering according to the shifted filtering coefficient comprises:

when the received data are synchronization symbols or pilots, converging the filtering coefficient of the equalizer;
when the received data are data, inputting one by one the data into a filter of the equalizer, filtering and outputting equalized data.

5. A synchronization and equalization combined design device for a microwave system, comprising:

a frequency synchronization module, configured to: perform a frequency offset compensation on received data according to a frequency offset estimation result;
a coarse time synchronization module, configured to: caching the received data on which the frequency offset compensation has been performed, complete a coarse time synchronization on cached data to obtain a coarse synchronization result;
a fine time synchronization module, configured to: taking the coarse synchronization result as a starting point, completing a fine time synchronization to obtain an adjustment value of synchronization position; adjust a timing position of the received data on which the frequency offset compensation has been performed according to the adjustment value of synchronization position;
an adaptive equalizer, configured to: shift a filtering coefficient of the equalizer according to the adjustment value of synchronization position by: if the adjustment value of synchronization position d=0, the filtering coefficient of the equalizer remains unchanged; if d> 0, left shifting the filtering coefficient of the equalizer by d data; if d <0, right shifting the filtering coefficient of the equalizer by abs(d) data; wherein, the abs(d) is an absolute value of d; and complete an equalization filtering on the received data on which the frequency offset compensation has been performed according to the shifted filtering coefficient.

6. The device of claim 5, wherein, the coarse time synchronization module comprises a data caching module, a correlation calculating module and a peak value searching module,
the data caching module is configured to: cache the received data on which the frequency offset compensation has been performed;
the correlation value calculating module is configured to: according to two successive synchronization symbols in the cached data, calculate a delay correlation value;
the peak value searching module is configured to: search for a maximum value of the delay correlation value, wherein a position corresponding to the maximum value of the delay correlation value is the coarse synchronization result.

7. The device of claim 5 or 6, wherein, the fine time synchronization module comprises a synchronization symbol caching module, a FFT/IFFT module and a channel impulse response, CIR, estimating and a searching module;
the synchronization symbol caching module is configured to: take the coarse synchronization result as the starting point, extract N data of the received data on which the frequency offset compensation has been performed;
the FFT/IFFT module is configured to: perform a FFT on the extracted N data to obtain a first frequency-domain symbol sequence; and, performing a FFT on locally stored synchronization symbols to obtain a second frequency-domain symbol sequence;
the CIR estimating and searching module is configured to: perform a IFFT on a ratio of the first frequency-domain symbol sequence to the second frequency-domain symbol sequence, to obtain a time-domain channel impulse response; search for a maximum value of the time-domain channel impulse response, and a position corresponding to the maximum value of the time-domain channel impulse response is the adjustment value of synchronization position.

**Patentansprüche**

1. Kombiniertes Synchronisations- und Entzerrungsentwurfsverfahren für ein Mikrowellensystem, umfassend:

gemäß einem Ergebnis einer Frequenzverschiebungsschätzung, Durchführen einer Kompensation der Frequenzverschiebung auf empfangenen Daten;
Zwischenspeichern der empfangenen Daten, auf denen die Kompensation der Frequenzverschiebung durchgeführt worden ist, Ausführen einer groben Zeitsynchronisation auf den zwischengespeicherten Daten zum Erhalt eines groben Synchronisationsergebnisses;
Annehmen des groben Synchronisationsergebnisses als einen Ausgangspunkt, Ausführen einer feinen Zeitsynchronisation zum Erhalt eines Einstellwerts der Synchronisationsposition;
Einstellen einer Zeitpunktposition der empfangenen Daten an der die Kompensation der Frequenzverschiebung durchgeführt worden ist, gemäß dem Einstellwert der Synchronisationsposition;

Verschieben eines Filterungskoeffizienten eines Entzerrers gemäß dem Einstellwert der Synchronisationsposition durch: falls der Einstellwert der Synchronisationsposition d=0 ist, bleibt der Filterkoeffizient des Entzerrers unverändert; falls d>0 ist, Verschieben nach links des Filterkoeffizienten des Entzerrers um d Daten; falls d<0 ist, Verschieben nach rechts des Filterkoeffizienten des Entzerrers um abs(d) Daten; wobei abs(d) ein Absolutwert von d ist; und Ausführen, durch den Entzerrer, einer Entzerrungsfilterung auf die empfangenen Daten, auf denen die Kompensation der Frequenzverschiebung durchgeführt worden ist, gemäß dem verschobenen Filterkoeffizienten.

2.  Verfahren nach Anspruch 1, wobei der Schritt des Ausführens einer groben Zeitsynchronisation auf die zwischengespeicherten Daten zum Erhalt eines groben Synchronisationsergebnisses umfasst:

gemäß zwei aufeinanderfolgenden Synchronisationssymbolen, die in den empfangenen Daten übermittelt werden, auf die die Kompensation der Frequenzverschiebung durchgeführt worden ist, Berechnen eines Verzögerungskorrelationswerts;
Suchen nach einem Höchstwert des Verzögerungskorrelationswerts und einer Position, die dem Höchstwert des Verzögerungskorrelationswerts entspricht, welcher das Ergebnis der groben Synchronisation ist.

3.  Verfahren nach Anspruch 1 oder 2, wobei der Schritt des Annehmens des groben Synchronisationsergebnisses als einen Ausgangspunkt, das Ausführen einer feinen Zeitsynchronisation zum Erhalt eines Einstellwerts der Synchronisationsposition umfasst:

Annehmen des groben Synchronisationsergebnisses als einen Ausgangspunkt, Extrahieren von N Daten aus den empfangenen Daten, auf denen die Kompensation der Frequenzverschiebung durchgeführt worden ist, und Durchführen einer Fast-Fourier-Transformation, FFT, auf die N extrahierten Daten zum Erhalt einer ersten Frequenzbereich-Symbolfolge;
Durchführen einer FFT auf lokal gespeicherten Synchronisationssymbolen zum Erhalt einer zweiten Frequenzbereich-Symbolfolge;
Durchführen einer inversen Fast-Fourier-Transformation, IFFT, auf einem Verhältnis der ersten Frequenzbereich-Symbolfolge zur zweiten Frequenzbereich-Symbolfolge zum Erhalt einer Zeitbereich-Kanalimpulsantwort;

Suchen nach einem Höchstwert der Zeitbereich-Kanalimpulsantwort, und einer Position, die dem Höchstwert der Zeitbereich-Kanalimpulsantwort entspricht, welcher der Einstellwert der Synchronisationsposition ist.

4.  Verfahren nach Anspruch 1, wobei der Schritt des Ausführens der Entzerrungsfilterung gemäß dem verschobenen Filterkoeffizienten umfasst:

wenn die empfangenen Daten Synchronisationssymbole oder Piloten sind, Konvergieren des Filterkoeffizienten des Entzerrers;
wenn die empfangenen Daten Daten sind, die einzeln die Daten in einen Filter des Entzerrers eingeben, Filtern und Ausgeben der entzerrten Daten.

5.  Kombinierte Synchronisations- und Entzerrungsentwurfsvorrichtung für ein Mikrowellensystem, umfassend:

ein Frequenzsynchronisationsmodul, konfiguriert, zum: Durchführen einer Frequenzverschiebung auf empfangene Daten gemäß einem Ergebnis einer Frequenzverschiebungsschätzung;
ein Modul zur groben Zeitsynchronisation, konfiguriert zum: Zwischenspeichern der empfangenen Daten, auf die die Kompensation der Frequenzverschiebung durchgeführt worden ist, Ausführen einer groben Zeitsynchronisation auf die zwischengespeicherten Daten zum Erhalt eines groben Synchronisationsergebnisses;
ein Modul zur feinen Zeitsynchronisation, konfiguriert zum: Annehmen des groben Synchronisationsergebnisses als einen Ausgangspunkt, Ausführen einer feinen Zeitsynchronisation zum Erhalt eines Einstellwerts der Synchronisationsposition; Einstellen einer Zeitpunktposition der empfangenen Daten auf ddie die Kompensation der Frequenzverschiebung durchgeführt worden ist, gemäß dem Einstellwert der Synchronisationsposition;
einen einstellbaren Entzerrer, konfiguriert zum: Verschieben eines Filterungskoeffizienten des Entzerrers gemäß dem Einstellwert der Synchronisationsposition durch: falls der Einstellwert der Synchronisationsposition d=0 ist, bleibt der Filterkoeffizient des Entzerrers unverändert; falls d>0 ist, Verschieben nach links des Filterkoeffizienten des Entzerrers um d Daten; falls d<0 ist, Verschieben nach rechts des Filterkoeffizienten des Entzerrers um abs(d) Daten; wobei abs(d) ein Absolutwert von d ist; und Ausführen einer Entzerrungsfilterung auf die empfangenen Daten, auf die die Kompensation der Frequenzverschiebung durchgeführt worden ist, gemäß dem verschobenen Filterkoeffizienten.

6. Vorrichtung nach Anspruch 5, wobei das Modul zur groben Zeitsynchronisation ein Modul zum Zwischenspeichern von Daten, ein Modul zur Korrelationsberechnung und ein Modul zum Suchen nach einem Spitzenwert umfasst,

das Modul zum Zwischenspeichern konfiguriert ist zum: Zwischenspeichern der empfangenen Daten auf die die Kompensation der Frequenzverschiebung durchgeführt worden ist;

das Modul zur Korrelationswertberechnung konfiguriert ist zum: Berechnen, gemäß zwei aufeinanderfolgenden Synchronisationssymbolen in den zwischengespeicherten Daten, eines Verzögerungskorrelationwerts;

das Modul zum Suchen nach einem Spitzenwert konfiguriert ist zum: Suchen nach einem Höchstwert des Verzögerungskorrelationswerts, wobei eine Position, die dem Höchstwert des Verzögerungskorrelationswerts entspricht, das grobe Synchronisationsergebnis ist.

7. Vorrichtung nach Anspruch 5 oder 6, wobei das Modul zur feinen Zeitsynchronisation ein Modul zum Zwischenspeichern eines Synchronisationssymbols, ein FFT/IFFT-Modul und ein Modul zum Schätzen und Suchen einer Kanalimpulsantwort, CIR, umfasst;

das Modul zum Zwischenspeichern eines Synchronisationssymbols konfiguriert ist zum: Annehmen des groben Synchronisationsergebnisses als den Ausgangspunkt, Extrahieren von N Daten aus den empfangenen Daten, auf die die Kompensation der Frequenzverschiebung durchgeführt worden ist;

das FFT/IFFT-Modul konfiguriert ist zum: Durchführen einer FFT auf die N extrahierten Daten zum Erhalt einer ersten Frequenzbereich-Symbolfolge; und Durchführen einer FFT auf lokal gespeicherte Synchronisationssymbole zum Erhalt einer zweiten Frequenzbereich-Symbolfolge;

das Modul zum Schätzen und Suchen von CIR konfiguriert ist zum: Durchführen einer IFFT auf ein Verhältnis der ersten Frequenzbereich-Symbolfolge zur zweiten Frequenzbereich-Symbolfolge zum Erhalt einer Zeitbereich-Kanalimpulsantwort; Suchen nach einem Höchstwert der Zeitbereich-Kanalimpulsantwort, und einer Position, die dem Höchstwert der Zeitbereich-Kanalimpulsantwort entspricht, welcher der Einstellwert der Synchronisationsposition ist.

**Revendications**

1. Procédé de conception de synchronisation et d'égalisation combinées pour un système micro-ondes, comprenant :

en fonction d'un résultat d'estimation de décalage de fréquence, l'exécution d'une compensation de décalage de fréquence sur des données reçues ;

la mise en mémoire cache des données reçues sur lesquelles la compensation de décalage de fréquence a été effectuée, l'exécution d'une synchronisation temporelle brute sur des données mises en mémoire cache pour obtenir un résultat de synchronisation brute ;

la prise du résultat de synchronisation brute en tant que point de début, l'exécution d'une synchronisation temporelle fine pour obtenir une valeur d'ajustement de position de synchronisation ;

l'ajustement d'une position de timing des données reçues sur lesquelles la compensation de décalage de fréquence a été effectuée en fonction de la valeur d'ajustement de position de synchronisation ;

le déplacement d'un coefficient de filtrage d'un égaliseur en fonction de la valeur d'ajustement de position de synchronisation par : si la valeur d'ajustement de position de synchronisation d=0, le coefficient de filtrage de l'égaliseur reste inchangé ; si d>0, le déplacement vers la gauche du coefficient de filtrage de l'égaliseur de d données ; si d<0, le déplacement vers la droite du coefficient de filtrage de l'égaliseur de abs(d) données ; dans lequel abs(d) est une valeur absolue de d ; et

l'exécution, par l'égaliseur, d'un filtrage d'égalisation sur les données reçues sur lesquelles la compensation de décalage de fréquence a été effectuée en fonction du coefficient de filtrage déplacé.

2. Procédé selon la revendication 1, dans lequel l'étape d'exécution d'une synchronisation temporelle brute sur des données mises en mémoire cache pour obtenir un résultat de synchronisation brute comprend :

en fonction de deux symboles de synchronisation consécutifs transmis dans les données reçues sur lesquelles la compensation de décalage de fréquence a été effectuée, le calcul d'une valeur de corrélation de retard ;

la recherche d'une valeur maximale de la valeur de corrélation de retard, et une position correspondant à la valeur maximale de la valeur de corrélation de retard étant le résultat de synchronisation brute.

3. Procédé selon la revendication 1 ou 2, dans lequel l'étape de prise du résultat de synchronisation brute en tant que point de début, d'exécution d'une synchronisation temporelle fine pour obtenir une valeur d'ajustement de position de synchronisation comprend :

la prise du résultat de synchronisation brute en tant que point de début, l'extraction de N données des données reçues sur lesquelles la compensation de décalage de fréquence a été effectuée, et l'exécution d'une transformée rapide de Fourier, FFT, sur les N données extraites pour obtenir une première séquence de symboles dans le domaine fréquentiel ;

l'exécution d'une FFT sur des symboles de synchronisation mémorisés localement pour obtenir une deuxième séquence de symboles dans le domaine fréquentiel ;

l'exécution d'une transformée rapide de Fourier inverse, IFFT, sur un rapport de ladite première séquence de symboles dans le domaine fréquentiel sur ladite deuxième séquence de symboles dans le domaine fréquentiel, pour obtenir une réponse d'impulsion de canal dans le domaine temporel ;

la recherche d'une valeur maximale de la réponse d'impulsion de canal dans le domaine temporel, et une position correspondant à la valeur maximale de la réponse d'impulsion de canal dans le domaine temporel est la valeur d'ajustement de position de synchronisation.

4. Procédé selon la revendication 1, dans lequel ladite étape d'exécution du filtrage d'égalisation en fonction du coefficient de filtrage déplacé comprend :

lorsque les données reçues sont des symboles ou des pilotes de synchronisation, faire converger du coefficient de filtrage de l'égaliseur ;

lorsque les données reçues sont des données, entrer l'une après l'autre les données dans un filtre de l'égaliseur, filtrer et délivrer les données égalisées.

5. Dispositif de conception de synchronisation et d'égalisation combinées pour un système micro-ondes, comprenant :

un module de synchronisation fréquentielle, configuré pour : l'exécution d'une compensation de décalage de fréquence sur des données reçues en fonction d'un résultat d'estimation de décalage de fréquence ;

un module de synchronisation temporelle brute, configuré pour : la mise en mémoire cache des données reçues sur lesquelles la compensation de décalage de fréquence a été effectuée, l'exécution d'une synchronisation temporelle brute sur des données mises en mémoire cache pour obtenir un résultat de synchronisation brute ;

un module de synchronisation temporelle fine, configuré pour : la prise du résultat de synchronisation brute en tant que point de début, l'exécution d'une synchronisation temporelle fine pour obtenir une valeur d'ajustement de position de synchronisation ; l'ajustement d'une position de timing des données reçues sur lesquelles la compensation de décalage de fréquence a été effectuée en fonction de la valeur d'ajustement de position de synchronisation ;

un égaliseur adaptatif, configuré pour : le déplacement d'un coefficient de filtrage de l'égaliseur en fonction de la valeur d'ajustement de position de synchronisation par : si la valeur d'ajustement de position de synchronisation d=0, le coefficient de filtrage de l'égaliseur reste inchangé ; si d>0, le déplacement vers la gauche du coefficient de filtrage de l'égaliseur de d données ; si d<0, le déplacement vers la droite du coefficient de filtrage de l'égaliseur de abs(d) données ; dans lequel abs(d) est une valeur absolue de d ; et l'exécution d'un filtrage d'égalisation sur les données reçues sur lesquelles la compensation de décalage de fréquence a été effectuée en fonction du coefficient de filtrage déplacé.

6. Dispositif selon la revendication 5, dans lequel le module de synchronisation temporelle brute comprend un module de mise en mémoire cache de données, un module de calcul de corrélation et un module de recherche de valeur de crête,

le module de mise en mémoire cache de données est configuré pour : la mise en mémoire cache des données reçues sur lesquelles la compensation de décalage de fréquence a été effectuée ;

le module de calcul de valeur de corrélation est configuré pour : en fonction de deux symboles de synchronisation consécutifs dans les données mises en mémoire cache, le calcul d'une valeur de corrélation de retard ;

le module de recherche de valeur de crête est configuré pour : la recherche d'une valeur maximale de la valeur de corrélation de retard, dans lequel une position correspondant à la valeur maximale de la valeur de corrélation de retard est le résultat de synchronisation brute.

7. Dispositif selon la revendication 5 ou 6, dans lequel le module de synchronisation temporelle fine comprend un module de mise en mémoire cache de symbole de synchronisation, un module FFT/IFFT et un module d'estimation et de recherche de réponse d'impulsion de canal, CIR ;

le module de mise en mémoire cache de symbole de synchronisation est configuré pour : la prise du résultat de synchronisation brute en tant que point de début, l'extraction de N données des données reçues sur lesquelles la compensation de décalage de fréquence a été effectuée ;

le module FFT/IFFT est configuré pour : l'exécution d'une FFT sur les N données extraites pour obtenir une première séquence de symboles dans le domaine fréquentiel ; et l'exécution d'une FFT sur des symboles de synchronisation mémorisés localement pour obtenir une deuxième séquence de symboles dans le domaine fréquentiel ;

le module d'estimation et de recherche de CIR est configuré pour : l'exécution d'une IFFT sur un rapport de la première séquence de symboles dans le domaine fréquentiel sur la deuxième séquence de symboles dans le domaine fréquentiel, pour obtenir une réponse d'impulsion de canal dans le domaine temporel ; la recherche d'une valeur maximale de la réponse d'impulsion de canal dans le domaine temporel, et une position correspondant à la valeur maximale de la réponse d'impulsion de canal dans le domaine temporel est la valeur d'ajustement de position de synchronisation.

Frequency offset
compensation

Coarse time
synchronization

Fine time
synchronization

Frequency
offset estimation

Adaptive
equalization

FIG. 1

| Data | Synchronization symbol | Synchronization symbol | Data |
|------|------------------------|------------------------|------|

FIG. 2

Frequency synchronization

Frequency offset compensation

Frequency offset value

Frequency offset estimation

Coarse time synchronization

Data caching

Correlation value calculation

Peak value searching

Coarse synchronization position

Synchronization symbol caching

FFT/IFFT

CIR estimating and searching

Fine time synchronization

Fine synchronization position

Error value

Transverse filtering

Error estimation

Coefficient control

Filter coefficient

Adaptive equalizer

⇨ Primary data stream

➤ Internal data stream

→ Parameter stream

FIG. 3

**EP 2 838 208 B1**

**Patent documents cited in the description**

- US 2002137510 A1

- WO 2009109938 A1